# EUROPEAN PATENT APPLICATION

(11) **EP 1 811 713 A1**
(43) Date of publication of application: **25.07.2007**
(21) Application number: 05808061.5
(22) Date of filing: 02.11.2005
(51) Int. Cl.: H04L 7/02

(54) **METHOD FOR DETERMINING CLOCK TRACE PATH AND METHOD OF CLOCK TRACE IN THE NETWORK**

(30) Priority: 03.11.2004 CN 200410088785
(71) Applicant: Huawei Technologies Co., Ltd., Longgang District, Shenzhen Guangdong 518129 (CN)
(72) Inventor: LUO, Xianlong Huawei Administration Building, Shenzhen Guangdong 518129 (CN); WANG, Yu Huawei Administration Building, Shenzhen Guangdong 518129 (CN); LV, Lingling Huawei Administration Building, Shenzhen Guangdong 518129 (CN); JI, Kuiwen Huawei Administration Building, Shenzhen Guangdong 518129 (CN); XIAO, Changgui Huawei Administration Building, Shenzhen Guangdong 518129 (CN)
(74) Representative: Epping - Hermann - Fischer
(86) International application number: PCT/CN2005/001823
(87) International publication number: WO 2006/047946

(57) **Abstract**

A method for determining clock trace path and method of clock trace in the network. Said method for determining clock trace path includes: first, in the network, the distributed network units or the centralized servers determine the shortest path arriving respective clock-source network unit in accordance to the preserved network topology information the weighting information of the clock trace link; and among the clock-source provided by the respective arrival clock-source network unit, determining the clock-source network unit wherein the clock-source is the best quality as the optimal clock-source network unit; hereafter, the distributed network units or the centralized servers will regard the determined path arriving the optimal clock-source network unit as the clock trace path. Said method of clock trace then is tracing the clock using the said clock trace path. A method for clock tracing in a network and a method for clocking tracing, the method for clock tracing in a network includes: distributed network element or a centralized server in the network determining a shortest path to each of clock-source network elements according to stored network topology information and clock-tracing link weight information; determining, among clock sources provided by reachable clock-source network elements, one with an optimal quality, where a clock-source network element with that clock source being considered optimal; and taking a shortest path to the optimal clock-source network element as a clock-tracing path. Furthermore, the method for clocking tracing uses such a clock-tracing path for clock tracing.

## Description

### Field of the Invention

The present invention relates to network synchronization technologies, and particularly to a method for determining a clock-tracing path and a method for clock tracing in a network.

### Background of the Invention

Traditional transmission networks adopt the SSM (Synchronization Status Message) protocol to accomplish an operation of clock tracing. The SSM is used to transfer a quality level of a timing signal through a synchronization timing link, and thus node clocks in an SDH network and a synchronization network can obtain information of an upstream clock through parsing of the SSM, perform a corresponding operation on the clock of a present node, e.g. tracing, switching or shift holding, and pass the synchronization information of that node downstream.

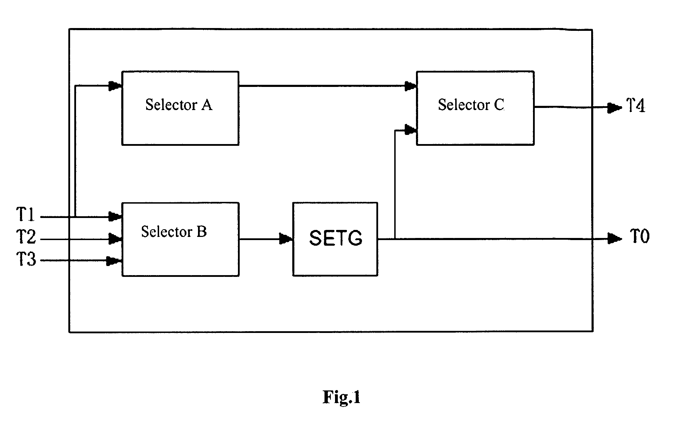

The ITU-T Recommendation G.783 requires that a clock function architecture of an SDH (Synchronous Digital Hierarchy) equipment shall be in accordance with that as shown in Fig.1, where T1 is an STM-N (Synchronous Transport Module Level N) input interface, that is, signals from an STM-N line, T2 is a PDH (Plesio-chronous Digital Hierarchy) input interface, that is, signals from a PDH Tributary, T3 is an external synchronization input interface, that is, reference signals via a external timing input, SETG is a Synchronous Equipment Timing Generator, that is, an SDH Equipment Clock (SEC), T4 is an external synchronization output interface, an timing of which can be directly output via the STM-N line, or can be from the SETG, and T0 is an internal timing interface.

The priority order of timing reference clock signals for selectors in Fig.1 is as following, from high to low:

1. A manually forced command, e.g. a forced shift holding or forced switching.

2. Timing signal invalidation, e.g. LOS, AIS or OOF (LOF).

3. An SSM quality level.

4. A preset priority.

Traditional transmission topologies are relatively simple, and are primarily of ring or chain network architecture. With the development of the transmission networks, the transmission network topologies have been gradually developed as a MESH (full-mesh networking) network topology. However, such a traditional SSM protocol becomes unable to be adapted to the development of the transmission networks due to its own limitations.

In such a network, a corresponding priority table of reference clock sources shall be configured for all network elements according to clock tracing instances. Thus, a good plan shall be configured manually for clock tracing instances through manual configurations during an initial network building, that is, the corresponding priority table of clock sources shall be configured manually in order to avoid in any case the problems of clock inter-locking, a low-level clock of tracing by a high-level clock or the like. Moreover in the network, two reference clock sources with a mutual protection have to be configured respectively for each network element.

As can be seen from the above, the existing method for clock tracing through the SSM protocol has the following drawbacks.

1. The problems of a clock tracing loop a low-level clock of tracing by a high-level clock or the like may tend to occur.

2. Only two reference clock sources with a mutual protection can be configured for most network elements, and the multi-point invalidation cannot be avoided, that is, the multi-point invalidation may result in that a network element cannot to find a clock source being traced.

3. A clock transfer path may be relatively long, and hence a clock tracing effect may be weakened.

### Summary of the Invention

In view of the above problems in the prior art, embodiments of the present invention provide a method for determining clock-tracing path and a method for clock tracing in a network, which can effectively avoid the problem of clock tracing in error that may occurs in a relatively complex network, and thus ensure the quality of a clock in the network.

The object of the present invention can be achieved through the following technical solutions.

An embodiment of the present invention provides a method for determining a clock-tracing path in a network, which may include:

A. determining, by a distributed network element or a centralized server in the network, a shortest path to each of clock-source network elements according to stored network topology information, link weight information and clock-source network element information;

B. determining, by the distributed network element or the centralized server in the network, an optimal one among the clock-source network elements; and

C. taking, by the distributed network element or the centralized server in the network, the determined shortest path to the optimal clock-source network element as a clock-tracing path of the distributed network element.

Another embodiment of the present invention provides a method for clock tracing in a network, which may include:

A. determining, by a distributed network element or a centralized server in the network, a shortest path to each of clock-source network elements according to stored network topology information, link weight information and clock-source network element information;

B. determining, by the distributed network element or the centralized server in the network, an optimal one among the clock-source network elements;

C. taking, by the distributed network element or the centralized server in the network, the determined shortest path to the optimal clock-source network element as a clock-tracing path of the distributed network element; and

D. using the clock-tracing path for clock tracing.

The following may be optional for the method:

updating automatically, by the distributed network element or the centralized server in the network, a link weight according to a link bit error, alarm information and bandwidth information;

the distributed network element or the centralized server may determine the network topology information according to obtained neighborhood relationship information.

the distributed network element may obtain the neighborhood relationship information through a link management protocol, and spread the neighborhood relationship information through an extended link status routing protocol; and

the centralized server may obtain the neighborhood relationship information of the distributed network element information through a configuration or an automatic search method.

Optionally, the optimal clock-source network element to be traced may be determined according to clock source quality levels and/or priorities.

Optionally, in the case that quality levels of the clock-source network elements are different, the clock-source network element to be traced may be determined according to the clock source quality levels; and

in the case that the quality levels of the clock-source network elements are identical, the clock-source network element to be traced may be further determined according to the clock source priorities.

Optionally, the distributed network element or the centralized server may compare the determined shortest path to the optimal clock source element with an original clock-tracing path, and if the two paths are different, may take the determined shortest path to the optimal clock source element as the clock-tracing path for clock tracing, otherwise use the original clock-tracing path for clock tracing.

Optionally, the distributed network element may be located in the same control domain as the clock-source network elements.

Optionally, in the case that the clock source network elements and the distributed network element are located in different control domains, the distributed network element may be configured to trace a clock of a Speaker network element in the same control domain.

Optionally, the method may further include:

configuring, by the distributed network element or the centralized server, a timing period for calculation of a clock-tracing path, which may be used to trigger periodically the distributed network element or the centralized server to calculate a clock-tracing path.

Optionally, the method may further include processing, by the distributed network element, based upon the SSM protocol, and outputting the same information as the SSM protocol.

A still another embodiment of the present invention provides a method for determining a clock-tracing path in a network which may include:

A. determining, by a distributed network element or a centralized server in the network, an optimal one among clock-source network elements;

B. determining, by the distributed network element or the centralized server in the network, a shortest path to the optimal clock-source network element according to stored network topology information, link weight information of the distributed network element and clock-source network element information; and

C. taking, by the distributed network element or the centralized server in the network, the determined shortest path to the optimal clock-source network element as a clock-tracing path of the distributed network element.

A further embodiment of the present invention provides a method for clock tracing in a network, which may include:

A. determining, by a distributed network element or a centralized server in the network, an optimal one among clock-source network elements;

B. determining, by the distributed network element or the centralized server in the network, a shortest path to the optimal clock-source network element according to stored network topology information, link weight information of the distributed network element and clock-source network element information; and

C. taking, by the distributed network element or the centralized server in the network, the determined shortest path to the optimal clock-source network element as a clock-tracing path of the distributed network element; and

D. using the clock-tracing path for clock tracing.

As can be seen from above, the embodiments of the present invention use the shortest path for clock tracing and select a plurality of optimal-quality clock sources as traced clocks, and thus can resist a clock multi-point fault, ensure a high-quality clock transfer, and avoid a service transmission fault caused by clock tracing in error. In addition, the embodiments of the present invention can avoid the problem of looping the clock tracing, and select automatically an optimal clock-tracing path according to such factors as a clock source quality, a transmission quality, etc. Thus, a better solution for clock tracing can be provided for the network. Moreover, the embodiments of the present invention can finish in an automatic and real-time way the calculation and update of an optimal clock route, and thus further solve effectively the problem existing in a clock tracing process in the network of the prior art.

Furthermore in the embodiments of the present invention, it may be unnecessary for each distributed network element to support the SSM protocol in the case that each network element implements a clock tracing process.

### Brief Descriptions of the Drawings

Fig. 1 is a structural diagram for functions of a G783 clock;

Fig.2 and Fig.3 are flow diagrams of a method according to embodiments of the present invention; and

Fig.4 is a schematic structural diagram for a network architecture of MESH.

### Detailed Descriptions of the Embodiments

Embodiments of the present invention determine a shortest path from each distributed network element to clock-source network elements, and further to determine a corresponding optimal-quality clock source. Thus, the optimal-quality clock source can be traced according to the shortest path, and thus it can be ensured that each distributed network element can trace an optimal-quality clock source. The embodiments of the present invention will be described hereinafter by way of an example of a MESH network.

In the MESH network, since the network topology is of neither simple ring nor simple chain architecture, a clock tracing relationship shall be updated dynamically according to the network topology during a clock tracing. There are generally two network management approaches in the MESH network: one approach refers to a distributed management, where each distributed network element can determine its own clock-tracing path, and the other approach refers to a centralized management, where a centralized server can control clock tracings path of all distributed network elements. Thus, the embodiments of the present invention adopt corresponding methods for processing clock tracing respectively for the two management approaches, but the same essence shall apply to them, both of which will be described respectively in the following.

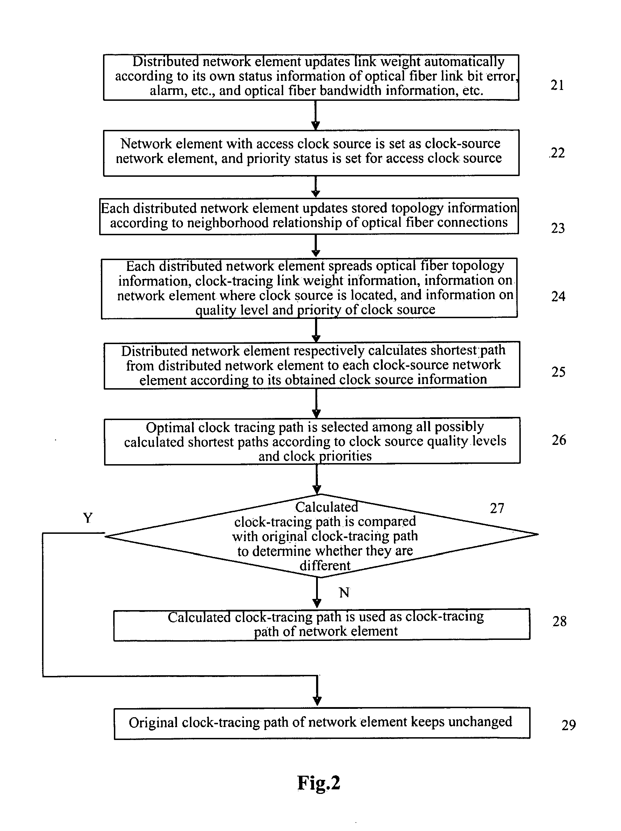

In the distributed management, a specific implementation process for the method according to an embodiment of the present invention is as shown in Fig.2, including in particular the following steps.

In step 21, within the same control domain of the MESH network, each distributed network element in need of clock tracing updates a link weight automatically according to its own status information such as a link bit error, an alarm or the like as well as other information such as a bandwidth or the like.

The link weight describes a link quality for clock tracing, a clock-tracing path preferably selects a high-quality link, and initially, the link weight can be set manually;

In step 22, a network element with an access clock source is set as a clock-source network element, and a priority status is set for the access clock source;

After the setting of clock-source network element is finished, a clock signal-processing unit of clock-source network element monitors the clock source, and automatically updates a quality level of the access clock source. Alternatively, the quality level of the access clock source can be configured manually.

In addition, a timing period for calculation of a clock-tracing path can be configured at each network element, and this timing period can be used to trigger periodically the network element to calculate a clock-tracing path.

In step 23, each distributed network element in the MESH network obtains information on a relationship(s) with its neighborhood(s) through a link management protocol, such as the LMP protocol, the LLDP protocol or the like, and updates the neighborhood relationship information stored at that distributed network element according to the obtained neighborhood relationship information.

The step is to enable each distributed network element to obtain latest neighborhood relationship information.

In step 24, through an extended link status routing protocol, such as the extended OSPF-TE (Open Shortest Path First - Traffic Engineering) protocol, each distributed network element spreads the neighborhood information, the link weight information of that network element, information on whether that network element is a clock-source network element, information on a quality level and a priority of the clock source for that network element, etc., stored at that network element, and thus obtains topology information on the whole MESH network, the link weight information, clock-source network element information, information on the quality level and the priority of the clock source, etc. The clock-source network element information is the information recorded at that network element on whether that network element is a clock-source network element.

Furthermore, the neighborhood information of each distributed network element, the link weight information of that network element, the information on whether that network element is a clock-source network element, and the information on the quality level and the priority of the clock source for that network element may be changed, and any change of the above information can also be spread through the extended link status routing protocol, such as the extended OSPF-TE protocol.

The spreading of the information over the network ensures that each network element in need of clock tracing can select flexibly a clock-tracing path and a clock source to be traced according the information.

With such a configuration, when a distributed network element in need of clock tracing determines a start or restart of a clock tracing, the distributed network element starts automatic calculation of an optimal clock-source tracing path.

Typically, when the network topology, the link weight or other information related to the clock source changes or the timing period expires, a network element in need of clock tracing determines a start or restart of the calculation of a clock-tracing path.

The process of automatic calculation of the optimal clock-source tracing path is as follows:

In step 25, a distributed network element in need of clock tracing calculates a shortest path from that network element to each of the clock-source network elements which are provided with an access clock source, according to its obtained clock source information, network topology information, and link weight information, through a corresponding loop-free shortest path algorithm, such as the SPF (Shortest Path First) algorithm, the Minimum Spanning Tree algorithm, etc.

If the SPF algorithm is used to calculate a shortest path from a source node to a destination node, then two sets involved in the SPF algorithm, that is, a path tree set and a potential next-hop set, are initialized to two null sets firstly, and:

a. The source node is put into the potential next-hop set.

b. A node A, a path from the source node to which has a lowest weight, is selected from the potential next-hop set and put into the path tree set. If the potential next-hop set is already null, the calculation fails and the process exits, if the selected node is the destination node, the calculation succeeds in locating a shortest path which is in turn stored into the path tree set, and exits, otherwise, the process goes to step c.

c. Each of all nodes linked with the node A is checked to determine whether the node can be put into the potential next-hop set. If the node is neither in the path tree set nor in the potential next-hop set, then the node is put into the potential next-hop set. If the node is already in the path tree set, no further action is performed on the node. If the node is already in the potential next-hop set, it is required to compare path weights of a new path currently going to the node node and of an old path going to the node which is stored in the potential next-hop set. If the new path is smaller in weight than the old path, then the old path is deleted, and the new path is stored into the potential next-hop set. If the old path is smaller in weight than the new path, then no further action is performed. After checking all the nodes linked with the node A, the process jumps to step b.

The shortest loop-free path algorithm is used to determine, among traceable clock sources obtained by a distributed network element, a clock source to be traced by the network element, and thus the problem of looping a clock tracing can be avoided.

If no shortest path to any clock source can be calculated, then the clock of the network element can be set to a self-oscillation state.

In step 26, one with an optimal clock source quality is selected among clock-source network elements in all reachable paths according to clock source quality levels and corresponding clock priorities, that is, an optimal clock-tracing path is determined among the shortest reachable paths.

Firstly, the selection is based upon a clock source quality level. Then in the case that clock source quality levels are identical, a clock-source network element with a highest priority is selected and a shortest path to the clock-source network element is used as a clock-tracing path for the current network element.

The optimal-quality clock source is determined among the network elements in need of clock tracing, and thus it is possible to further ensure the quality of the clock tracing achieved according to the embodiment of the present invention.

In step 27, the newly calculated clock-tracing path of the network element is compared with the original clock-tracing path of the network element, to determine whether they are different, and, if different, the process goes to step 28, where the clock tracing relationship is changed in the clock signal processing unit of the network element, that is, the calculated clock-tracing path is used as a clock-tracing path of the network element, otherwise, the process goes to step 29, where the original clock-tracing path keeps unchanged.

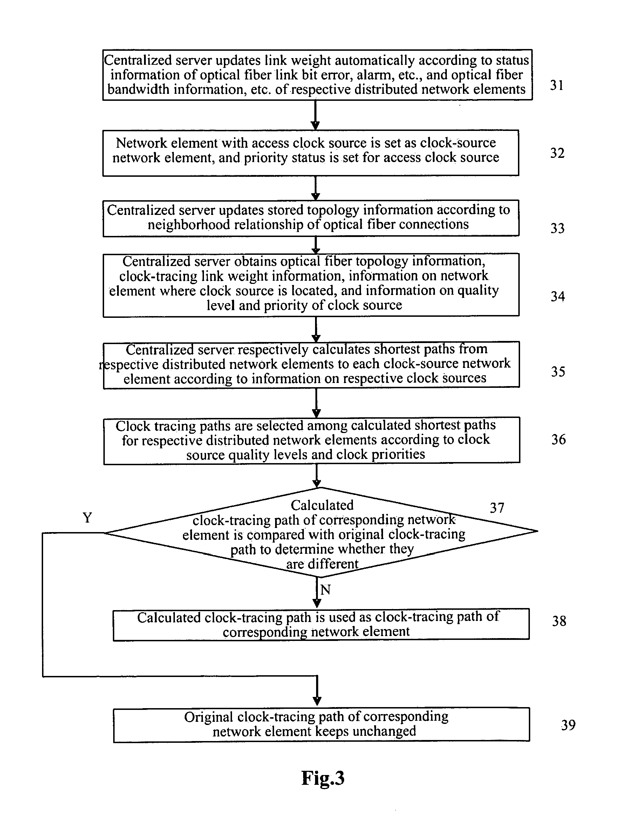

In the centralized management approach, a specific implementation process for the method according to an embodiment of the present invention is as shown in Fig.3, including in particular the following steps.

In step 31, within the same control domain of the MESH network, a centralized server updates a link weight automatically according to the status information such as a link bit error, an alarm or the like within the control domain as well as other information such as a bandwidth or the like.

In step 32, a network element with an access clock source is set as a clock-source network element, and a priority status is set for the access clock source;

After the setting of the clock-source network element is finished, a clock signal-processing unit of the clock-source network element monitors the clock source, and automatically updates a quality level of the access clock source. Alternatively, the quality level of the access clock source can be configured manually.

In addition, a timing period for calculation of a clock-tracing path can be configured at the centralized server, and the timing period can be used to trigger periodically the centralized server to calculate a clock-tracing path.

In step 33, the centralized server obtains information on a relationship of each network element with its neighborhood through a configuration or an automatic search.

Here, the automatic search refers to that the centralized server, through an automatic interaction with the network element, obtains the neighborhood relationship information of the network element in a special procedure. For example, the centralized server triggers the network element to send a JO message through a particular port, and obtains the neighborhood relationship(s) through a query about information of a network element and a port that receives the JO message.

In step 34, the centralized server processes the obtained neighborhood relationship information of each network element, the link weight information of the network element obtained from the network element, information on whether the network element is a clock-source network element, and information on the quality level and the priority of the clock source for the network element, and thus obtains topology information on the whole MESH network, weight information on a clock-tracing link, clock-source network element information, information on the quality level and the priority of the clock source, etc.

Furthermore, each network element can notify the centralized server of any change of the clock-tracing link weight information and of the information on the quality level and the priority of the clock source, and thus it can be ensured that the centralized server can select flexibly a clock-tracing path and a clock source to be traced according the information.

With such a configuration, when the centralized server determines a start or restart of a clock tracing, the centralized server starts automatic calculation of an optimal clock-source tracing path.

In general, when the network topology, the link weight or other information related to the clock source changes or the timing period expires, the centralized server determines a start or restart of the calculation of a clock-tracing path.

The process of automatic calculation of the optimal clock-source tracing path is as follows:

In step 35, the centralized server calculates, respectively for each distributed network element in need of clocking tracing, a shortest path from the network element to each of the clock-source network elements which are provided with an access clock source, according to the network topology information and the link weight information, through a corresponding loop-free shortest path algorithm, such as the SPF algorithm, the Minimum Spanning Tree algorithm, etc.

The shortest loop-free path algorithm is used to determine, among obtained traceable clock sources, a clock source to be traced by the network element, and thus the problem of looping a clock tracing can be avoided.

If no shortest path to any clock source can be calculated, then the clock of the network element can be set to a self-oscillation state.

In step 36, one with an optimal clock source quality is selected among clock-source network elements in all reachable paths according to clock source quality levels and corresponding clock priorities.

Firstly the selection is based upon a clock source quality level. Then in the case that clock source quality levels are identical, a clock-source network element with a highest priority is selected and a shortest path to the clock-source network element is used as a clock-tracing path for the current network element.

The optimal-quality clock source is determined among the network elements in need of clock tracing, and thus it is possible to further ensure the quality of the clock tracing achieved according to the embodiment of the present invention.

In step 37, the newly calculated clock-tracing path of the network element is compared with the original clock-tracing path of the network element, to determine whether they are different, and, if different, the process goes to step 38, where the clock tracing relationship is changed in the clock signal processing unit of the network element, that is, the calculated clock-tracing path is used as a clock-tracing path of the network element, otherwise, the process goes to step 39, where the original clock-tracing path keeps unchanged.

According to the embodiments of the present invention, if a clock-source network element and a distributed network element in need of clock tracing are located in different control domains of a hierarchical network, the distributed network element in each control domain can be configured to trace a Speaker network element of the control domain. Here, the Speaker network element, as used in a hierarchical routing protocol, refers to that control domains which exchange information with each other, that is, a non-Speaker network element in the control domain is incapable of direct information exchange with a network element in another control domain.

According to the methods of the embodiments, it is still possible to perform the processing at each distributed network element based upon the SSM protocol, and an SSM quality output can be in consistency with the traditional SSM protocol. That is, in order to keep compatibility with an original network, it is still possible to perform the processing based upon the SSM protocol in the embodiments, and the same information with the original protocol can be output, but a clock tracing is performed without the SSM protocol.

The methods according to the embodiments of the present invention will be described hereinafter by way of another specific example.

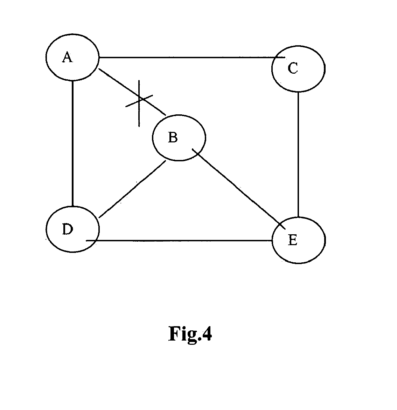

Referring to Fig.4, network elements B and C are network elements with an access clock source, or Speaker network elements in a control domain, with identical clock tracing link weights. Quality levels of the access clock sources for the network elements B and C are identical, and the priority of the network element C is lower than that of the network element B. When the network element A requires a clock tracing, a clock-tracing path is calculated to be the network element A tracing the network element B, because the path from the network element A to the clock-source network element B is the shortest and the priority of the network element B is higher than that of the network element C.

When the connection between the network elements A and B is broken, a corresponding clock-tracing path can be calculated in a real-time way as a path along which the network element A traces the network element D, and the network element D traces the network element B. That is, the clock source traced by the network element B is of a highest level, the clock of the network element D traces that of the network element B, and the clock of the network element A traces that of the network element D. Since a clock-source network element with a high-quality level and a high priority is preferred in the embodiments of the present invention, it is preferable that the network element B with a high priority be selected to be traced, although the path between the network elements A and C is the shortest. In other words, a clock source with a highest priority can be selected among clock sources reachable through the shortest paths, i.e. the selection shall be made not only dependent upon the shortest paths, according to the embodiments of the present invention.

Since clock-source network elements reissue clock quality information, a distributed network element or a centralized server in a MESH network can firstly determine an optimal one among the clock-source network elements, then determine a shortest path to the optimal clock-source network element according to stored topology information of the MESH network, link weight information of the distributed network elements, and information of the clock-source network element, and finally can take the determined shortest path to the optimal clock-source network element as a clock-tracing path of a corresponding distributed network element, and use the clock-tracing path for a clock tracing.

While the preferred embodiments of the present invention have been described as above, the scope of the present invention shall not be limited thereto, and those skilled in the art can make various changes and modifications to the embodiments without departing from the scope of the present invention. It is intended all the variations and modifications shall fall within the scope of the present invention that shall be merely as defined in the claims thereof.

## Claims

1. A method for determining a clock-tracing path in a network, comprising:
A. determining, by a distributed network element or a centralized server in the network, a shortest path to each clock-source network element according to stored network topology information, link weight information and clock-source network element information;
B. determining, by the distributed network element or the centralized server in the network, an optimal one among the clock-source network elements; and
C. taking, by the distributed network element or the centralized server in the network, the determined shortest path to the optimal clock-source network element as a clock-tracing path of the distributed network element.

2. A method for clock tracing in a network, comprising:
A. determining, by a distributed network element or a centralized server in the network, a shortest path to each of clock-source network elements according to stored network topology information, link weight information and clock-source network element information;
B. determining, by the distributed network element or the centralized server in the network, an optimal one among the clock-source network elements;
C. taking, by the distributed network element or the centralized server in the network, the determined shortest path to the optimal clock-source network element as a clock-tracing path of the distributed network element; and
D. using the clock-tracing path for clock tracing.

3. The method for clock tracing in a network according to claim 2, wherein further comprising:
updating automatically, by the distributed network element or the centralized server in the network, a link weight according to a link bit error, alarm information and bandwidth information.

4. The method for clock tracing in a network according to claim 2, wherein the distributed network element or the centralized server determines the network topology information according to obtained neighborhood relationship information.

5. The method for clock tracing in a network according to claim 4, wherein the distributed network element obtains the neighborhood relationship information through a link management protocol, and spreads the neighborhood relationship information through an extended link status routing protocol; and
the centralized server obtains the neighborhood relationship information of the distributed network element information through a configuration or an automatic search method.

6. The method for clock tracing in a network according to claim 2, wherein:
determining the optimal clock-source network element to be traced according to clock source quality levels and/or priorities.

7. The method for clock tracing in a network according to claim 6, wherein in the case that quality levels of the clock-source network elements are different, determining the clock-source network element to be traced according to the clock source quality levels; and
in the case that the quality levels of the clock-source network elements are identical, the clock-source network element to be traced is further determined according to the clock source priorities.

8. The method for clock tracing in a network according to claim 6, wherein:
the distributed network element or the centralized server compares the determined shortest path to the optimal clock source element with an original clock-tracing path, and if the two paths are different, takes the determined shortest path to the optimal clock source element as the clock-tracing path for clock tracing, otherwise uses the original clock-tracing path for clock tracing.

9. The method for clock tracing in a network according to claim 2, wherein the distributed network element is located in the same control domain as the clock-source network elements.

10. The method for clock tracing in a network according to claim 2, wherein in the case that the clock source network elements and the distributed network element are located in different control domains, the distributed network element can be configured to trace a clock of a Speaker network element in the same control domain.

11. The method according to claim 2, wherein further comprising:
configuring, by the distributed network element or the centralized server, a timing period for calculating a clock-tracing path, the timing period being used to trigger periodically the distributed network element or the centralized server to calculate a clock-tracing path.

12. the method according to claim 2, wherein further comprising:
processing by the distributed network element based upon the SSM protocol, and outputting the same information as the SSM protocol.

13. A method for determining a clock-tracing path in a network, comprising:
A. determining, by a distributed network element or a centralized server in the network, an optimal one among clock-source network elements;
B. determining, by the distributed network element or the centralized server in the network, a shortest path to the optimal clock-source network element according to stored network topology information, link weight information and clock-source network element information; and
C. taking, by the distributed network element or the centralized server in the network, the determined shortest path to the optimal clock-source network element as a clock-tracing path of the distributed network element.

14. A method for clock tracing in a network, comprising:
A. determining, by a distributed network element or a centralized server in the network, an optimal one among clock-source network elements;
B. determining, by the distributed network element or the centralized server in the network, a shortest path to the optimal clock-source network element according to stored network topology information, link weight information and clock-source network element information; and
C. taking, by the distributed network element or the centralized server in the network, the determined shortest path to the optimal clock-source network element as a clock-tracing path of the distributed network element; and
D. using the clock-tracing path for clock tracing.
